(19) Europäisches Patentamt
European Patent Office
Office européen des brevets

(11) **EP 3 045 500 A1**

(12) **EUROPEAN PATENT APPLICATION**
published in accordance with Art. 153(4) EPC

(43) Date of publication:
**20.07.2016 Bulletin 2016/29**

(51) Int Cl.:
*C08L 101/00* (2006.01)  *C08J 7/00* (2006.01)
*C08K 5/09* (2006.01)  *C08L 67/04* (2006.01)
*C08L 101/16* (2006.01)

(21) Application number: **14844359.1**

(22) Date of filing: **10.09.2014**

(86) International application number:
**PCT/JP2014/073890**

(87) International publication number:
**WO 2015/037605 (19.03.2015 Gazette 2015/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.09.2013  JP 2013187055**

(71) Applicant: **Toyo Seikan Group Holdings, Ltd.**
**Shinagawa-ku,**
**Tokyo 1418627 (JP)**

(72) Inventors:
• **KATAYAMA Tsutaki**
**Yokohama-shi**
**Kanagawa 240-0062 (JP)**
• **YOSHIKAWA Seishi**
**Yokohama-shi**
**Kanagawa 240-0062 (JP)**

(74) Representative: **Gibbs, Richard**
**Marks & Clerk LLP**
**Aurora**
**120 Bothwell Street**
**Glasgow G2 7JS (GB)**

(54) **BIODEGRADABLE RESIN COMPOSITION HAVING A POROUS STRUCTURE AND METHOD FOR SURFACE TREATMENT OF SAME**

(57)  The present invention relates to a formed biodegradable resin article having a porous structure in the biodegradable resin composition of the surface portion and an ester degradation accelerator dispersed in the biodegradable resin composition of the inner portion.

FIG.1

RESIN DEGRADATION RATIO AFTER FOUR-DAY
TREATMENT IN DEGRADATION SOLUTION

**Description**

Technical Field

The present invention relates to a formed biodegradable resin article which is obtained by using a biodegradable resin and which has a porous structure in the biodegradable resin composition of the surface portion, and also to a method for treating the same.

Background Art

Conventionally, wastewater treatment has been conducted to prevent eutrophication of rivers, lakes, and ponds caused by influences of domestic wastewater, industrial wastewater, and the like and to prevent pollution caused by application of nitrogen fertilizers to agricultural land in surrounding water environments (groundwater, rivers, lakes, and ponds).

Such a wastewater treatment is generally conducted based on a biochemical treatment, which is advantageous in terms of costs. In wastewater treatment facilities, polluted water introduced into a treatment tank is aerated in the presence of activated sludge, and organic matter (biochemical oxygen demand (BOD) source) contained in the polluted water is oxidatively degraded by an action of aerobic microorganisms in the activated sludge. This activated sludge treatment has a poor function to remove nitrogen components, and hence nitrogen components such as ammonia tend to remain.

One of the substances which cause the eutrophication is nitrate (nitrogen component). Suppose a case where organic matter in wastewater is completely removed, but the final effluent contains a large amount of such a nitrogen component. In such a case, the wastewater treatment becomes meaningless, for example, because the nitrogen component promotes unusual growth of phytoplankton.

In this respect, recently, a nitrification treatment in which ammonia is converted to nitrate by nitrifying bacteria has been conducted after the activated sludge treatment, and then the nitrogen component (nitrate) has been removed by a denitrification treatment with denitrification bacteria under an anaerobic condition.

This denitrification treatment utilizes the reducing action of the denitrification bacteria which use the organic matter (i.e., the BOD source) as an energy source and the nitrate as an electron receptor. The organic matter, which serves as the energy source, supplies electrons necessary for the reduction reaction in the denitrification reaction. Consequently, the nitrate is reduced to nitrogen through nitrous acid, nitrogen monoxide, and dinitrogen monoxide. As a result, various nitrogen compounds in wastewater are removed by being released as nitrogen gas to the air.

This denitrification treatment uses microorganisms as described above, and employs a method (solid-phase denitrification method) which is carried out, while the reducing power necessary for the denitrification is supplemented by using solid organic matter as an energy source necessary for the denitrification reaction or the like. Here, when microorganisms fixed to a surface of a resin support is used for conducting the denitrification treatment, the treatment efficiency can be improved. Here, to increase the fixation rate of microorganisms, it is necessary to perform a surface treatment (pore formation or the like), in general. Regarding methods for producing porous resin particles, production methods based on the so-called deposition method have been proposed such as those shown in Japanese Patent Application Publication Nos. 2009-144012 and 2009-242728. Nevertheless, it has been required to develop a support to which microorganisms are easily fixed and especially which is more suitable as a supply source of a carbon source for the solid-phase denitrification method.

Summary of Invention

An object of the present invention is to provide a formed biodegradable resin article to which microorganisms are easily fixed and which is especially suitable for use in the solid-phase denitrification method and also to provide a method for treating a surface therefor.

The inventors of the present application have found that the above-described object can be achieved when a formed biodegradable resin article in which an ester degradation accelerator is dispersed in a biodegradable resin is treated in a specific degradation solution. This finding has led to the completion of the invention of the present application.

Specifically, the present invention provides a formed biodegradable resin article having a porous structure in the biodegradable resin composition of the surface portion.

The present invention also provides a method for treating a surface of a formed biodegradable resin article in which an ester degradation accelerator is dispersed in a biodegradable resin, the method comprising treating a biodegradable resin in a phosphate-containing solution containing a hydrolase and having a pH in a range from 9 to 12.

The present invention makes it possible to obtain a formed biodegradable resin article in which a porous structure is provided to a resin surface with a low energy, to which useful microorganisms are easily fixed because of the porous structure, and which has a high capability of supplying a carbon source, such as lactic acid, used in the denitrification reaction.

Brief Description of Drawings

Fig. 1 shows the resin degradation ratios after a four-day treatment on formed biodegradable resin articles in degradation solutions.
Fig. 2 shows electron micrographs of surfaces and inner portions of the formed biodegradable resin articles.
Fig. 3 shows confocal laser scan micrographs of surfaces of formed biodegradable resin articles.

Description of Embodiments

A formed biodegradable resin article of the present invention has a feature that it has a porous structure in the biodegradable resin composition of the surface portion and that an ester degradation accelerator dispersed in the biodegradable resin composition of the inner portion. Preferably, an arithmetic mean roughness Sa of a surface of the porous structure is 1.0 μm or higher. The arithmetic mean roughness Sa is particularly preferably in a range from 1.0 to 5.0 μm, and further preferably in a range from 1.0 to 2.0 μm. If the arithmetic mean roughness Sa is above the range, the weight loss ratio relative to the weight of the formed biodegradable resin article which has not been subjected to an enzymatic treatment increases, so that the productivity decreases. Meanwhile, if the arithmetic mean roughness Sa is below the range, a support such as microorganisms is difficult to fix.

In the present invention, the arithmetic mean roughness Sa of the surface of the porous structure means the degree of pore formation in the surface of the formed article, and can be determined, for example, by observing the surface having the porous structure by using a confocal laser scan microscope (LSM 5 PASCAL MAT: Carl Zeiss), and then determining the degree of pore formation from the obtained three-dimensional data by using the bundled software.

The biodegradable resin used in the present invention affords a carbon source such as lactic acid or a lactic acid derivative mainly by non-biological hydrolysis, and the lactic acid or the like serves as a substrate, which is an energy source for the denitrification bacteria.

In the formed biodegradable resin article of the present invention, an ester degradation accelerator is dispersed in the biodegradable resin composition. The biodegradable resin only needs to be biodegradable, and examples thereof include polylactic acid-based resins, polybutylene succinate, polycaprolactone, polyhydroxyalkanoates, polybutylene succinate adipate copolymer, polybutylene terephthalate adipate, starch-based resins, cellulose-based resins, chitin, chitosan, aromatic polyesters such as polyethylene terephthalate, polyethylene naphthalate, and polybutylene terephthalate, and the like. Of the above-described biodegradable resins, polylactic acid-based resins are particularly preferable. One of these biodegradable resins may be used alone, or two or more thereof may be used in combination.

In the above-described biodegradable resin, any of the above-described components may form a copolymer with another component. Examples of the component which form the copolymer with the biodegradable resin include polyols such as ethylene glycol, propylene glycol, butanediol, octanediol, dodecanediol, neopentyl glycol, glycerin, pentaerythritol, sorbitan, bisphenol A, and polyethylene glycol; dicarboxylic acids such as succinic acid, adipic acid, sebacic acid, glutaric acid, decanedicarboxylic acid, cyclohexanedicarboxylic acid, terephthalic acid, isophthalic acid, and anthracenedicarboxylic acid; hydroxycarboxylic acids such as glycolic acid, lactic acid, hydroxypropionic acid, hydroxybutyric acid, hydroxyvaleric acid, hydroxycaproic acid, and hydroxybenzoic acid; lactones such as glycolide, caprolactone, butyrolactone, valerolactone, propiolactone, and undecalactone; and the like.

The molecular weight of the biodegradable resin is not particularly limited, and the weight average molecular weight is preferably in a range from 5,000 to 1,000,000, and more preferably in a range from 10,000 to 500,000 considering the mechanical characteristics and processability.

The ester degradation accelerator used in the present invention is not particularly limited, as long as the ester degradation accelerator is capable of promoting the degradation of the biodegradable resin. The ester degradation accelerator is an acid-releasing resin. Here, the acid-releasing resin is a polyester having a high polarity, i.e., a high affinity for water. The acid-releasing resin preferably has a higher hydrolysis rate than the biodegradable resin. Because of the high hydrolysis rate, such an acid-releasing resin is hydrolyzed in the biodegradable resin to release a water-soluble acid, and the acid degrades the biodegradable resin in the course of bleeding from the biodegradable resin. Consequently, the degradation rate of an electron donor-supplying agent is also increased. For the polarity, the SP value (solubility parameter) calculated by the Fedors method (Polym. Eng. Sci., 14, 147-154 (1974)) or the like can be used as an index. The SP value may be, for example, 22.0 or higher, 23.0 or higher, or 24.0 or higher. The SP value is preferably 25.0 or higher.

The released acid is preferably one which exhibits a pH (at 25°C) of 4 or lower in an aqueous solution at a concentration of 0.005 g/ml, and particularly preferably one which exhibits a pH (at 25°C) of 3 or lower in the aqueous solution. The acid released by the acid-releasing resin is preferably one selected from the group consisting of lactic acid, oxalic acid, maleic acid, glycolic acid, and combinations thereof.

Those having the above-described characteristics include polyoxalates and polyglycolic acid-based resins. One of these acid-releasing resins may be used alone, or a blend thereof may be used. In the present invention, it is preferable to use, as a polyoxalate, a polymer, such as a homopolymer, a copolymer, or a blend, in which oxalic acid is polymerized as at least one monomer.

In the above-described acid-releasing resin, the above-described component may form a copolymer with another component. Examples of the component which forms the copolymer with the acid-releasing resin include polyols such as ethylene glycol, propylene glycol, butanediol, octanediol, dodecanediol, neopentyl glycol, glycerin, pentaerythritol, sorbitan, bisphenol A, and polyethylene glycol; dicarboxylic acids such as succinic acid, adipic acid, sebacic acid, glutaric acid, decanedicarboxylic acid, cyclohexanedicarboxylic acid, terephthalic acid, isophthalic acid, and anthracenedicarboxylic acid; hydroxycarboxylic acids such as glycolic acid, lactic acid, hydroxypropionic acid, hydroxybutyric acid, hydroxyvaleric acid, hydroxycaproic acid, and hydroxybenzoic acid; lactones such as glycolide, caprolactone, butyrolactone, valerolactone, propiolactone lactone, and undecalactone; and the like.

In addition, the component released from the acid-releasing resin is preferably one which is used by microorganism in a biological treatment, after bleeding from the biodegradable resin. Since the formed biodegradable resin article is completely degraded in a degradation solution, and all the degradation products are used in the biological treatment, an environmental clean-up method leaving no residue can be provided. In addition, the component released from the acid-releasing resin is expected to exhibit an effect of enhancing the activity of the microorganisms which removes the substance to be treated and other effects. The term "bleeding" herein refers to a phenomenon in which a hydrolysate of the acid-releasing resin oozes from the inner portion of the biodegradable resin to the surface of the biodegradable resin.

The content of the ester degradation accelerator in the formed biodegradable resin article of the present invention is preferably 1 to 30% by weight, and more preferably 5 to 20% by weight, considering the processability.

The formed biodegradable resin article which contains the biodegradable resin and the ester degradation accelerator but has not been subjected to the treatment for providing the porous structure to the surface portion can be produced in a usual manner. For example, an electron donor-supplying agent can be produced by feeding the biodegradable resin and the ester degradation accelerator simultaneously to a single-screw or twin-screw extruder-kneader, followed by melt blending and then by pelletization. A person skilled in the art can set the melt extrusion temperature, as appropriate, considering the glass transition temperatures, the melting points, and the mixing ratio of the biodegradable resin and the ester degradation accelerator used and the like. The melt extrusion temperature is generally 100 to 250°C.

If necessary, known additives such as plasticizers, heat stabilizers, light stabilizers, antioxidants, ultraviolet absorbers, flame retardants, coloring agents, pigments, fillers, bulking agents, mold release agents, antistats, fragrances, lubricants, foaming agents, antibacterial/antifungal agents, and nucleating agents may be blended in the formed biodegradable resin article of the present invention. Moreover, a resin other than the biodegradable resin and the acid-releasing resin may be blended, unless any effect of the present invention is impaired. For example, it is possible to blend water-soluble resins such as polyethylene glycol and polyvinyl alcohol, as well as polyethylene, polypropylene, ethylene-propylene copolymer, acid-modified polyolefin, ethylene-methacrylic acid copolymer, ethylene-vinyl acetate copolymer, ionomer resin, polyethylene terephthalate, polybutylene terephthalate, polyvinyl acetate, polyvinyl chloride, polystyrene, polyester rubber, polyamide rubber, styrene-butadiene-styrene copolymer, and the like. In addition, a copolymer of the biodegradable resin and the acid-releasing resin may be blended for the purpose of improving the dispersibility of the acid-releasing resin. In addition, the form of the formed biodegradable resin article of the present invention may be, but is not particularly limited to, a pellet, a film, a powder, a fiber, a filter, or the like.

The formed biodegradable resin article of the invention of the present application has a porous structure in a surface portion thereof. Here, the above-described porous structure in the surface portion of the formed biodegradable resin article can be obtained by a treatment by a method of the present invention comprising treating a formed biodegradable resin article in which an ester degradation accelerator is dispersed in a biodegradable resin in a phosphate-containing solution containing a hydrolase.

In the method of the invention of the present application, the phosphate-containing solution containing a hydrolase is used as a degradation solution, and the above-described formed biodegradable resin article is treated in the solution. The phosphate-containing solution may be an aqueous solution of sodium dihydrogen phosphate ($NaH_2PO_4$) or an aqueous solution of disodium hydrogen phosphate ($Na_2HPO_4$), a buffer solution using these solutions, such as a phosphate buffer or citrate-phosphate buffer in which aqueous solutions of sodium dihydrogen phosphate ($NaH_2PO_4$) and disodium hydrogen phosphate ($Na_2HPO_4$) are mixed, or the like. The salt concentration is, for example, 10 to 150 mM, and preferably 50 to 120 mM.

The pH of the phosphate-containing solution can be selected, as appropriate, according to the types of the biodegradable resin, the ester degradation accelerator, and the hydrolase used, and the like. The pH is preferably alkaline, and, for example, a pH of 9 to 12, and preferably a pH of 10 to 11 can be employed.

The hydrolase used in the present invention is not particularly limited, as long as the hydrolase generally degrades the biodegradable resin. A person skilled in the art can use any hydrolase. Examples of the enzyme include proteases, cellulases, cutinases, lipases, and the like. Of the above-described enzymes, proteases are preferable, and alkali proteases which exhibit the activity in an alkaline pH region are particularly preferable. For example, Savinase 16.0 L can be used. The amount of the hydrolase can be determined, as appropriate, by a person skilled in the art, and, for example, a amount suitable for the resin to be degraded can be determined based on the activity unit specific to the enzyme used.

In the method of the present invention, the treatment is conducted by placing the above-described formed biodegradable resin article in the above-described degradation solution. If necessary, an operation such as shaking or stirring may be conducted. Conditions such as the treatment temperature and the treatment time can be set, as appropriate, by a person skilled in the art according to the types and amounts of the biodegradable resin, the ester degradation accelerator, and the hydrolase used and the like. The temperature is, for example, 30 to 60°C, and preferably 40 to 50°C, and the time is 1 day to 10 days, and preferably 3 days to 5 days.

By employing the above-described method, portions made of the ester degradation accelerator in the surface portion of the formed biodegradable resin article in which the ester degradation accelerator is dispersed in the biodegradable resin can be degraded, and a porous structure can be provided to the surface portion. In the method of the present invention, the degradation of the formed biodegradable resin article occurs only in the surface portion, and the degradation amount (weight loss) of a main body of the formed biodegradable resin article as a whole is reduced, so that a large amount of the base material can be left. For this reason, the state can be retained in which the ester degradation accelerator is present in the biodegradable resin, while the inner portion of the formed biodegradable resin article remains untreated. When the formed biodegradable resin article prepared by the method of the present invention is used for the solid-phase denitrification method, microorganisms are easily fixed to the portions of the porous structure formed in the surface portion of the formed biodegradable resin article, and simultaneously the degradation from the inner portion of the biodegradable resin is promoted by the action of the ester degradation accelerator remaining in the inner portion of the formed biodegradable resin article. For this reason, the carbon source serving as an energy source for denitrification bacteria in the denitrification reaction can be efficiently supplied, and the efficiency of the denitrification treatment can be improved.

As described above, the method of the present invention makes it possible to selectively treat the surface portion, while the degradation of the base material itself of the formed biodegradable resin article is minimized. Hence, the weight loss of the formed biodegradable resin article as a whole decreases also in the treatment in the degradation solution. For example, the weight loss ratio relative to the weight of the formed biodegradable resin article which has not been subjected to the treatment by the method of the present invention is 40% or less, 10% or less, and preferably 5% or less.

Examples

<Measurement of Melting Point and Glass Transition Temperature>

Apparatus: DSC6220 manufactured by Seiko Instruments Inc. (Differential Scanning Calorimetry)
Sample preparation: sample amounts were 5 to 10 mg
Measurement conditions: the measurement was conducted under a nitrogen atmosphere at a rate of temperature rise of 10°C/min over a range from 0°C to 250°C.

<Measurement of Molecular Weight>

Apparatus: gel permeation chromatograph GPC
Detector: differential refractive index detector RI (model RI-2414 manufactured by Waters Corporation; sensitivity: 512) Column: one Shodex HFIP-LG column and two Shodex HFIP-806M columns manufactured by Showa Denko K. K.
Solvent: hexafluoroisopropanol (5 mM sodium trifluoroacetate was added)
Flow rate: 0.5 mL/min
Column temperature: 40°C
Sample preparation: To approximately 1.5 mg of each sample, 5 mL of the solvent was added, and the mixture was gently stirred at room temperature (sample concentration: approximately 0.03%). After the dissolution of the sample was visually confirmed, the mixture was filtered through a 0.45 μm filter (these were repeated two times from the weighing). All the samples were measured within approximately 1 hour after the start of their preparation.

<Degradable Resin Compositions>

1. Polylactic acid;

4032D manufactured by Nature Works was used.

2. Polyethylene oxalate (hereinafter, abbreviated as "PEOx")

The polyethylene oxalate used was synthesized by the following method.

<Synthesis of PEOx>

In a 1 L separable flask equipped with a mantle heater, a stirrer, a nitrogen inlet, and a condenser,

    472 g (4 mol) of dimethyl oxalate,
    297 g (4.8 mol) of ethylene glycol, and
    0.42 g of tetrabutyl titanate,

were placed, and the reaction was allowed to proceed for 7 hours under a nitrogen stream by raising the temperature inside the flask from 120°C to 180°C, while methanol was distilled off. At the end, 270 ml of methanol was distilled off.
After that, the inside temperature was raised to 170°C to 190°C stepwise, and the reaction was allowed to proceed for 7 hours with the degree of pressure reduction ranging from 0.1 kPa to 0.2 kPa. After that, the viscosity increased, and the polymer was taken out.
The polymer taken out was granulated with a crusher, and was crystallized by a vacuum drying treatment at 110°C for 4 hours.
The obtained polymer had a weight average molecular weight of 70000, a melting point of 180°C, and a glass transition temperature of 35°C.

<Preparation of Formed Biodegradable Resin Articles>

The above-described polylactic acid (PLA) or a dry blend of the PLA and the PEOx was melt blended by using a twin-screw extruder (ULT Nano05-20AG manufactured by TECHNOVEL CORPORATION) at 200°C, and pellet-shaped formed biodegradable resin articles were obtained as samples. In the forming, the blending ratio of the PLA and the PEOx was 95: 5 in terms of weight ratio. The obtained formed articles were dried at 120°C for 5 hours. The formed articles were sealed in aluminum pouches for preventing water absorption, and stored at 4°C.

<Pore Formation Test>

To 30 ml of a degradation solution in a 50 ml vial, 200 mg of the formed biodegradable resin articles prepared as described above and a predetermined amount of an enzyme were added, and the mixture was shaken at 45°C and at 100 rpm. Four days later, the pellets were taken out, and dried in a vacuum dryer at 60°C for 4 hours. The weight was measured, and the weight retention ratio was determined. The weight retention ratio was calculated according to the following formula:

$$\text{Weight retention ratio} = 100 - \{(\text{initial weight} - \text{weight after degradation}) \times 100 / \text{initial weight}\}$$

After that, morphological observation was conducted with a SEM.
Note that an aqueous phosphate solution (disodium hydrogen phosphate: 100 mM, pH: 10.5) or an aqueous CHES solution (CHES: 100 mM, pH: 10.5) was used as the degradation solution in the evaluation of the degree of pore formation.

<Observation under Electron Microscope and Determination of Arithmetic Mean Roughness>

The surface shape of the pellet obtained in the above-described test was observed by using a scanning electron microscope (S-3400N, HITACHI). In addition, an area of 267 × 210 μm$^2$ was observed by using a confocal laser scan microscope (LSM 5 PASCAL MAT, Carl Zeiss) with a magnification of 1000 times, and the arithmetic mean roughness (Sa) of the surface having the porous structure was determined from the obtained three-dimensional data by using the bundled software.

(Example 1)

A hydrolysis test was carried out by using the 5% PEOx-containing PLA as a formed biodegradable resin article, an aqueous phosphate solution as a degradation liquid, and Savinase 16.0 L (manufactured by Novozymes) as an enzyme.

(Comparative Example 1)

Comparative Example 1 was carried out in the same manner as in Example 1, except that an aqueous CHES solution was used as the degradation liquid.

(Reference Example 1)

Reference Example 1 was carried out in the same manner as in Example 1, except that the PLA was used as the formed biodegradable resin article.

(Reference Example 2)

Reference Example 2 was carried out in the same manner as in Reference Example 1, except that an aqueous CHES solution was used as the degradation liquid.

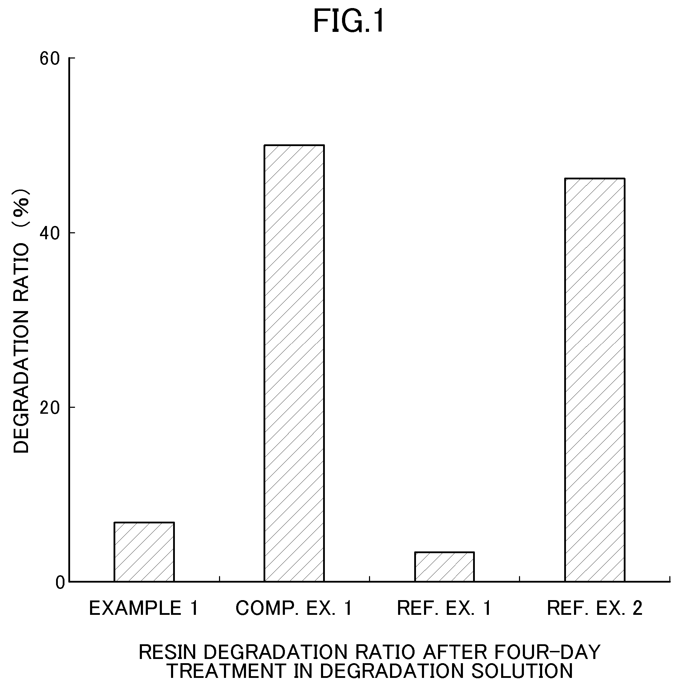

Fig. 1 shows the resin degradation ratios of Example 1, Comparative Example 1, and Reference Examples 1 and 2 described above determined four days later. The weight loss ratio of each of the test examples was as follows.

|  | Weight loss ratio |
|---|---|
| Example 1 | 6.84% |
| Comp. Ex. 1 | 49.97% |
| Ref. Ex. 1 | 3.47% |
| Ref. Ex. 2 | 46.12% |

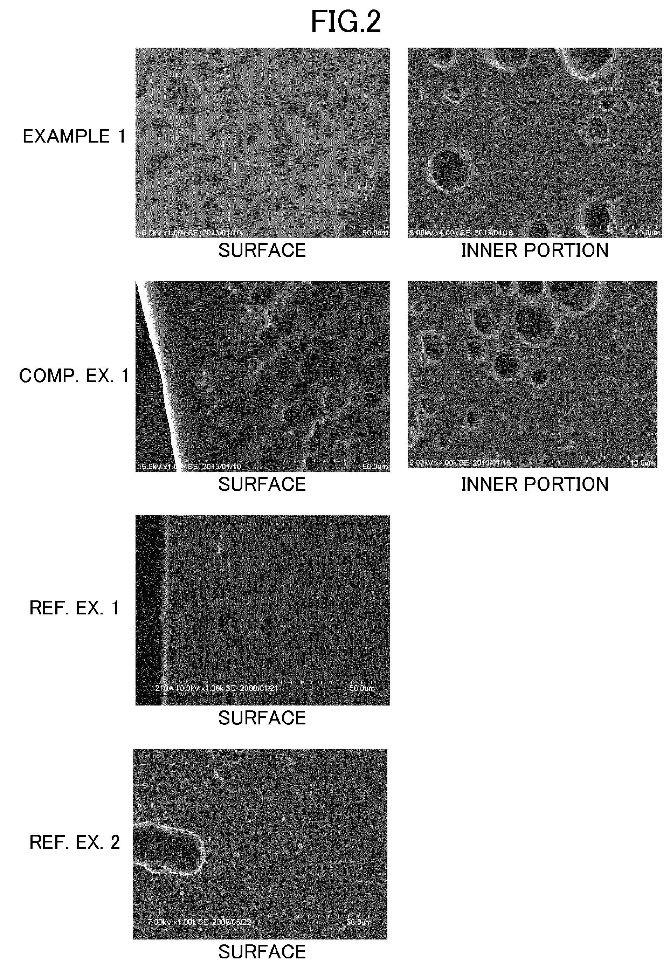

In addition, Fig. 2 shows electron micrographs of surfaces of Example 1, Comparative Example 1, and Reference Examples 1 and 2 described above and electron micrographs of inner portions of only Example 1 and Comparative Example 1.

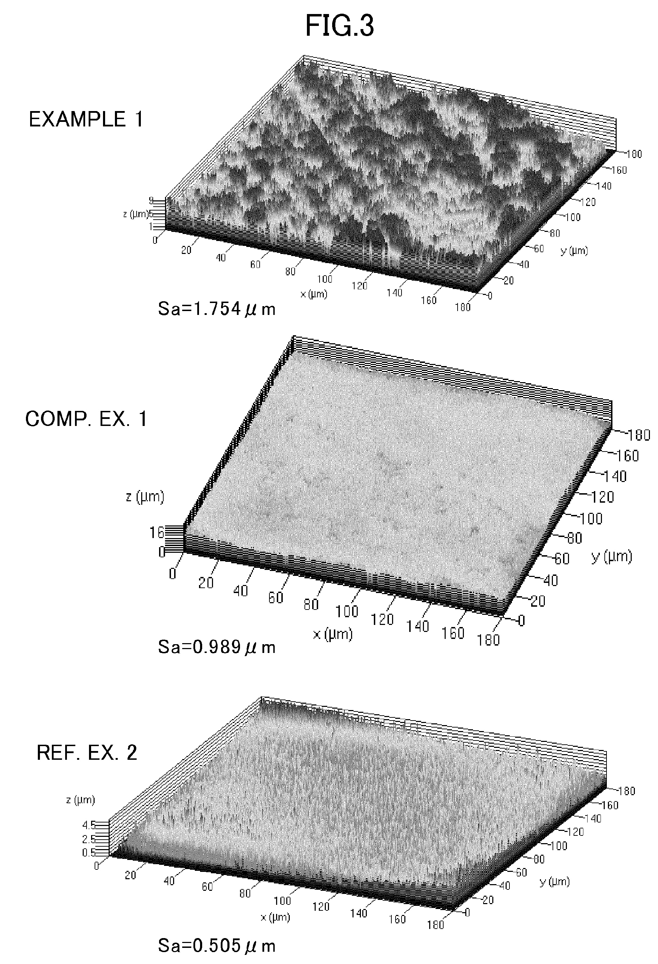

In addition, Fig. 3 shows confocal laser scan micrographs of Example 1, Comparative Example 1, and Reference Example 2 described above based on which the arithmetic mean roughness Sa was determined.

Here, based on the results shown in Figs. 1 and 2, a comparison is made between Example 1 in which the formed biodegradable resin article specified in the present application was treated with the aqueous phosphate solution and Comparative Example 1 in which the formed biodegradable resin article was treated with the aqueous CHES solution. From this comparison, it can be understood that the porous structure was formed in the surface of the formed biodegradable resin article in Example 1, while the degradation (weight loss) of the formed biodegradable resin article as a whole was greatly suppressed. In addition, from the electron micrographs of the inner portions of the formed biodegradable resin articles, it can be understood that the formation of the porous structure proceeded in the inner portion in Comparative Example 1 by the degradation of the ester degradation accelerator (PEOx) present in the inner portion.

Claims

1. A formed biodegradable resin article having a porous structure in the biodegradable resin composition of the surface portion and an ester degradation accelerator dispersed in the biodegradable resin composition of the inner portion.

2. The formed biodegradable resin article according to claim 1, wherein
an arithmetic mean roughness Sa of a surface having the porous structure is 1.0 μm or higher.

3. The formed biodegradable resin article according to claim 1 or 2, wherein
the ester degradation accelerator is an acid-releasing resin, and
the acid-releasing resin releases an acid selected from the group consisting of lactic acid, oxalic acid, maleic acid, glycolic acid, and combinations thereof.

4. The formed biodegradable resin article according to any one of claims 1 to 3, wherein
a solubility parameter of the acid-releasing resin calculated by the Fedors method is 22 or higher.

5. The formed biodegradable resin article according to claim 3 or 4, wherein
the acid-releasing resin is a polyoxalate and/or a polyglycolic acid-based resin.

6. The formed biodegradable resin article according to any one of claims 1 to 5, which is in a form of a pellet, a film, a powder, a fiber, or a filter.

7. The formed biodegradable resin article according to any one of claims 1 to 6, wherein
a weight loss ratio relative to the weight of the formed biodegradable resin article which has not been subjected to an enzymatic treatment is 40% or less.

8. A method for treating a surface of a formed biodegradable resin article in which an ester degradation accelerator is dispersed in a biodegradable resin composition, the method comprising treating the formed biodegradable resin article in a phosphate-containing solution containing a hydrolase and having a pH in a range from 9 to 12.

9. The method according to claim 8, wherein
a weight loss ratio relative to the weight of the biodegradable resin composition which has not been subjected to the enzymatic treatment is 40% or less.

10. The method according to claim 8 or 9, wherein
the hydrolase is an alkali protease.

# FIG.1

RESIN DEGRADATION RATIO AFTER FOUR-DAY
TREATMENT IN DEGRADATION SOLUTION

# FIG.2

EXAMPLE 1

SURFACE          INNER PORTION

COMP. EX. 1

SURFACE          INNER PORTION

REF. EX. 1

SURFACE

REF. EX. 2

SURFACE

# FIG.3

EXAMPLE 1

Sa=1.754 μm

COMP. EX. 1

Sa=0.989 μm

REF. EX. 2

Sa=0.505 μm

## INTERNATIONAL SEARCH REPORT

International application No.

PCT/JP2014/073890

### A. CLASSIFICATION OF SUBJECT MATTER
*C08L101/00*(2006.01)i, *C08J7/00*(2006.01)i, *C08K5/09*(2006.01)i, *C08L67/04*(2006.01)i, *C08L101/16*(2006.01)i

According to International Patent Classification (IPC) or to both national classification and IPC

### B. FIELDS SEARCHED

Minimum documentation searched (classification system followed by classification symbols)
C08L101/00, C08J7/00, C08K5/09, C08L67/04, C08L101/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y<br>A | WO 2008/026684 A1 (Nisshinbo Industries, Inc.),<br>06 March 2008 (06.03.2008),<br>paragraphs [0003], [0010] to [0015], [0023];<br>claims<br>& JP 5276984 B | 1-7<br>8-10 |
| Y<br>A | JP 2012-077246 A (Toyo Seikan Kaisha, Ltd.),<br>19 April 2012 (19.04.2012),<br>claims; paragraphs [0015] to [0027]<br>(Family: none) | 1-7<br>8-10 |
| Y<br>A | WO 2010/055903 A1 (Toyo Seikan Kaisha, Ltd.),<br>20 May 2010 (20.05.2010),<br>paragraphs [0022] to [0036]; claims<br>& JP 2010-116480 A    & JP 2010-116482 A<br>& JP 2011-6615 A | 1-7<br>8-10 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>02 October, 2014 (02.10.14) | Date of mailing of the international search report<br>14 October, 2014 (14.10.14) |
|---|---|
| Name and mailing address of the ISA/<br>Japanese Patent Office | Authorized officer |
| Facsimile No. | Telephone No. |

Form PCT/ISA/210 (second sheet) (July 2009)

## INTERNATIONAL SEARCH REPORT

International application No.

PCT/JP2014/073890

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2009-057408 A  (Toray Industries, Inc.),<br>19 March 2009 (19.03.2009),<br>claims; paragraphs [0010] to [0022]<br>(Family: none) | 1-7<br>8-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009144012 A

- JP 2009242728 A

**Non-patent literature cited in the description**

- *Polym. Eng. Sci.,* 1974, vol. 14, 147-154